# EUROPÄISCHE PATENTSCHRIFT

(11) **EP 0 465 955 B1**
(45) Veröffentlichungstag und Bekanntmachung des Hinweises auf die Patenterteilung: **03.05.1995**
(21) Anmeldenummer: 91110735.7
(22) Anmeldetag: 28.06.1991
(51) Int. Cl.: B23K 11/31

(54) **Pneumatisch betätigbarer Linearantrieb für Punktschweiss-Automaten**
Pneumatic operable actuator for spot weld automats
Entraînement linéaire à actionnement pneumatique pour automates de soudage par points

(30) Priorität: 11.07.1990 DE 9010446 U
(43) Veröffentlichungstag der Anmeldung: 15.01.1992
(73) Patentinhaber: VBS VERTRIEBSGESELLSCHAFT FÜR SCHWEISSTECHNIK mbH, D-35216 Biedenkopf (DE)
(72) Erfinder: Leinweber, Lothar, W-3560 Biedenkopf-Kombach (DE); Gaudier, Georg, W-3560 Biedenkopf-Ludwigshütte (DE)
(74) Vertreter: Thielmann, Paul, Dipl.-Landw.

(56) Entgegenhaltungen:
- DE-A- 3 321 707
- DE-A- 3 542 069

## Beschreibung

Die Erfindung betrifft einen pneumatisch betätigbaren Linearantrieb für Punktschweiß-Automaten mit folgenden Merkmalen:
In einem Zylinder sind mehrere in Tandemanordnung an einer Kolbenstange geführte Kolben angeordnet, wobei der Zylinder an einem Ende durch einen Zylinderboden verschlossen ist und in seinem anderen Endbereich einen von der Kolbenstange durchdrungenen Führungsring hat, wobei jeweils zwischen zwei benachbarten Kolben ein von der Kolbenstange durchdrungener zylinderfester Zwischenboden angeordnet ist, so daß der Zylinder in wenigstens drei Druckräume unterteilt ist, nämlich in einen zwischen dem Zylinderboden und dem diesem benachbarten ersten Kolben gelegener erster Druckraum, einen zwischen dem ersten Kolben und dem diesem benachbarten Zwischenboden gelegenen zweiten Druckraum und einen zwischen dem zweiten Kolben und dem Zwischenboden gelegenen dritten Druckraum;
die Kolbenstange hat auf ihrem zwischen den Kolben sich erstreckenden Abschnitt einen axialen Kanal, dessen zylinderbodenseitiges Ende ein Rückschlagventil aufweist und über dieses in den ersten Druckraum mündet und der durch radiale Kanäle mit dem ersten Druckraum und dem dritten Druckraum verbindbar ist, wobei der Zylinder zwei Luftleitungsanschlüsse hat, von denen der erste in den ersten Druckraum führt und mit dem dritten Druckraum verbindbar ist, während der zweite Luftleitungsanschluß über ein Drosselventil in den zweiten Druckraum führt;
der erste Kolben ist auf einem Endabschnitt mit geringerem Durchmesser der Kolbenstange axial beweglich angeordnet, wobei er in seiner zylinderbodenseitigen Endlage die aus dem axialen Kanal der Kolbenstange in den ersten Druckraum führenden radialen Kanäle verschließt, die er in seiner zylinderbodenfernen Endlage freigibt.

Ein Linearantrieb mit diesen Merkmalen ist aus der DE 35 42 069 A 1 bekannt. Der bekannten Vorrichtung liegt die Aufgabe zugrunde, eine Abbremsung der Elektrodenbewegung in Richtung auf das Werkstück zwecks Verringerung der Geräuschentwicklung beim Aufsetzen der Elektrode zu schaffen, bei der die durch die Verzögerungsmaßnahmen hervorgerufene Verlustzeit vernachlässigbar klein ist.

Diese Aufgabe soll bei der bekannten Vorrichtung dadurch gelöst werden, daß der im zweiten Druckraum (20) benachbarte Kolben (7) auf einen Bereich ( 9') verringerten Durchmessers des Schaftes (9) in Abhängigkeit von der Druckdifferenz zwischen erstem und zweitem Druckraum (18, 20) zwischen einer ersten Stellung, in der er eine das Ventil (15) umgehende Verbindungsleitung (17) zwischen dem Kanal (16) und dem zweiten Druckraum (20) abdeckt, und einer zweiten Stellung, in der er diese Verbindungsleitung (17) freigibt, axial verschiebbar ist, wobei er in seiner zweiten Stellung an einer Schulter (10) des Schaftes (9) anliegt.

Die gestellte Aufgabe kann zwar durch eine solche Kolben-Zylinderanordnung gelöst werden. Sie hat aber - insbesondere bei der in den Anmeldungsunterlagen als Ausführungsbeispiel dargestellten und beschriebenen Ausführungsform den Nachteil, daß sie konstruktiv sehr aufwendig und daher in der Herstellung auch sehr teuer ist. Ein weitere Nachteil besteht darin, daß die seitlich vom Zylinder angeordnete Drosseleinrichtung den insgesamt von dem Linearantrieb für die Schweißelektrode benötigten Raum erheblich vergrößert. Dies wirkt sich nachteilig für die Einsatzmöglichkeiten des Schweißautomaten aus, weil die Schweißzange mit ihrem Antrieb nicht mehr durch sehr enge Räume geführt werden kann.
Ein funktioneller Nachteil besteht darin, daß der auf einem inneren Endabschnitt der Kolbenstange axial bewegliche Kolben zur Erreichung seiner Ausgangsposition, in der er die radialen Verbindungskanäle von der ersten Druckkammer zum axialen Kanal der Kolbenstange verschließt, völlig von der Druckdifferenz zwischen dem ersten und dem zweiten Druckraum abhängig ist. Wenn diese Druckdifferenz einmal nicht ausreicht, um den Kolben in seine zylinderbodenseitige Endlage zu schieben, so können beim Beginn des nachfolgenden Arbeitshubes beide Kolben gleichzeitig beaufschlagt und die erstrebte Dämpfungswirkung verhindert werden.

Der Erfindung liegt daher die Aufgabe zugrunde, einen Linearantrieb der in der Beschreibungseinleitung und im Oberbegriff des Anspruchs 1 definierten Gattung so zu verbessern, daß die vorbeschriebenen Nachteile der bekannten Linearantrieb dieser Art weitestgehend beseitigt sind. Der Aufbau soll bei Vermeidung von Gußformteilen einfacher sein und eine zuverlässige Funktion gewährleisten.

Die gestellte Aufgabe wird erfindungsgemäß durch die Merkmale gemäß dem Kennzeichen des Anspruchs 1 gelöst. Eine weitere Vereinfachung bei Erhaltung größter Zuverlässigkeit wird durch die kennzeichnenden Merkmale der Unteransprüche erzielt.

Dadurch, daß auf dem Endabschnitt mit geringerem Durchmesser der Kolbenstange eine diese koaxial umgebende Wendeldruckfeder angeordnet ist, die sich unter Vorspannung einerseits an dem den Endabschnitt mit geringerem Durchmesser der Kolbenstange begrenzenden Absatz und andererseits an der Rückseite des auf diesem Kolbenstangenabschnitt axial beweglichen Kolben abstützt, ist gewährleistet, daß dieser Kolben in seiner Ausgangsstellung die radialen Verbindungskanäle vom axialen Kanal der Kolbenstange zum ersten Druckraum bei Beginn des Arbeitshubes stets geschlossen sind.

Dadurch, daß die Einrichtung, durch die der zweite Druckraum beim Arbeitshub entlüftet wird, vollständig in dem Zwischenboden untergebracht ist, nimmt der Linearantrieb einen wesentlich geringeren Raum in Anspruch, so daß die Einsatzmöglichkeiten einer solchermaßen angetriebenen Schweißzange erweitert werden.

Die Ausbildung des in dem Entlüftungsweg angeordneten Absperrorgans als zylindrischer Schieber, der durch die Druckdifferenzen zwischen dem zweiten und dem dritten Druckraum gesteuert wird, bewirkt eine erhebliche Vereinfachung gegenüber der als Kugelventil ausgebildeten Absperreinrichtung in der bekannten Kolben-Zylinder-Anordnung.

Durch die Ausbildung des am zylinderbodenseitigen Ende der Kolbenstange angeordneten, den axialen Kanal der Kolbenstange gegen Überdruck in der ersten Druckkammer sperrenden Rückschlagventils als Membranventil mit senkrecht zur Zylinderachse liegender Membrane ermöglicht eine Minimierung der für dieses Rückschlagventil erforderlichen axialen Baulänge.

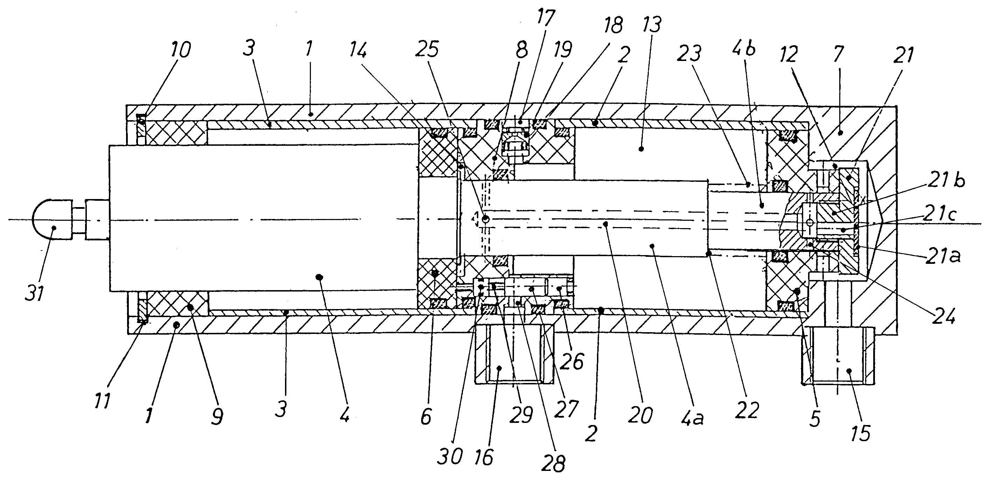

Die Erfindung wird im Folgenden anhand einer sie beispielsweise wiedergebenden Zeichnung näher erläutert. Die Zeichnung stellt einen axialen Schnitt durch den Linearantrieb in Ruhestellung bei vollständig zurückgezogener Kolbenstange dar.

Bei dem in der Zeichnung dargestellten Ausführungsbeispiel besteht der erfindungsgemäße Linearantrieb im wesentlichen aus einem Zylindermantel **1**, der mit einer aus mehreren Segmenten **2**, **3** zusammengesetzten Laufbuchse ausgekleidet ist. Darin ist eine Kolbenstange **4** mit zwei daran in Tandemanordnung geführten Kolben **5**,**6** axial beweglich angeordnet.

Der Zylinder ist an einem Ende durch einen festen Zylinderboden **7** verschlossen. Zwischen den beiden Kolben **5**,**6** ist ein Zwischenboden **8** angeordnet, der von dem sich zwischen den beiden Kolben **5**,**6** erstreckenden Abschnitt **4a** der Kolbenstange durchdrungen wird. Er wird zwischen den beiden Segmenten **2**,**3** der Laufbuchse in einer zylinderfesten Position gehalten. An seinem zylinderbodenfernen Ende ist in dem Zylinder ein von der Kolbenstange **4** durchdrungener Führungsring **9** angeordnet, der innenseitig an dem äußeren Segment **3** der Laufbuchse anliegt und außen von einem Sprengring **10** gehalten wird, der in einer Ringnut **11** des Zylindermantels **1** sitzt. Sein Innenquerschnitt ist mehreckig, so daß zwischen der Kolbenstange **4** und dem Führungsring **9** in der Zeichnung nicht dargestellte axiale Entlüftungskanäle vorhanden sind.

Der Zylinder ist in drei Druckräume unterteilt, nämlich in einen zwischen dem Zylinderboden **7** und dem ersten Kolben **5** gelegenen ersten Druckraum **12**, einen zwischen dem ersten Kolben **5** und dem Zwischenboden **8** gelegenen zweiten Druckraum **13** und einen zwischen dem zweiten Kolben **6** und dem Zwischenboden **8** gelegenen dritten Druckraum **14**.
An dem Zylinderboden **7** ist ein erster Luftleitungsanschluß **15** angeordnet, der unmittelbar in den ersten Druckraum **12** führt. Ein zweiter Luftleitungsanschluß **16** ist im Bereich des Zwischenbodens angeordnet. Dieser führt über einen den Zwischenboden **8** umgebenden Ringkanal **17** in den zweiten Druckraum **13**, wobei in einem vom Ringkanal **17** zum zweiten Druckraum **13** führenden Verbindungskanal **18** ein Drosselventil **19** angeordnet ist.

Die Kolbenstange **4** hat auf ihrem zwischen den beiden Kolben **5**,**6** sich erstreckenden Abschnitt einen axialen Kanal **20**. Dessen zylinderbodenseitiger Ausgang mündet in den ersten Druckraum **12**. An seiner Mündung ist ein bei Überdruck in dem ersten Druckraum **12** schließendes Rückschlagventil **21** mit einer parallel zum Zylinderboden **7** liegenden Membrane **21a** als Schließkörper angeordnet. Der Ventilsitz ist als eine koaxial in den Endabschnitt **4b** der Kolbenstange eingeschraubte Kopfschraube **21b** mit einem achsparallelen Kanal **21c** ausgebildet, die den Endabschnitt **4b** der Kolbenstange seitlich überragt.
Der Zylinderboden **7** hat innenseitig eine zentrale Ausdrehung, die einen Teil des ersten Druckraumes **12** bildet und in die der Endabschnitt **4b** der Kolbenstange mit dem Rückschlagventil **21** in Ruhestellung des Linearantriebes bei völlig zurückgezogener Kolbenstange hineinragt.

Der Endabschnitt **4b** der Kolbenstange hat einen gegenüber dem sich zwischen den beiden Kolben **5**,**6** erstrekkenden Abschnitt **4a** geringeren Durchmesser, wobei der Übergang zwischen beiden Abschnitten einen Absatz **22** bildet. Auf dem Endabschnitt **4b** der Kolbenstange sind der erste Kolben **5** axial beweglich sowie zwischen diesem und dem Absatz **22** eine Wendeldruckfeder **23** unter Vorspannung angeordnet. Die Wendeldruckfeder **23** drückt den ersten Kolben **5** in Ruhestellung des Linearantriebes bei völlig zurückgezogener Kolbenstange an den Zylinderboden **7**. Dabei liegt der zweite Kolben **6** an dem Zwischenboden **8**.

Unterhalb des Rückschlagventils **21** führen aus dem axialen Kanal **20** der Kolbenstange radiale Kanäle **24**, die bei Ruhestellung des Linearantriebes innerhalb des ersten Kolbens **5** liegen. Sie werden aber geöffnet und münden dann in den ersten Druckraum **12**, wenn der erste Kolben **5** gegen die Wirkung der Wendeldruckfeder **23** eingeschoben wird.

Am anderen Ende des axialen Kanals **20** sind ebenfalls radiale Kanäle **25** vorgesehen, die bei völlig eingezogener Kolbenstange innerhalb des Zwischenbodens **8** liegen und somit verschlossen sind. Sie werden aber geöffnet und münden dann in den dritten Druckraum, wenn die Kolbenstange **4** eine kurze Strecke ausgefahren ist.

Der Zwischenboden **8** enthält in seinem peripheren Bereich einen achsparallel verlaufenden Schieberzylinder **26**, der einerseits zum zweiten Druckraum **13** und andererseits zum dritten Druckraum **14** offen ist. In ihm ist ein in Abhängigkeit von den Druckdifferenzen zwischen dem zweiten Druckraum **13** und dem dritten Druckraum **14** axial beweglicher Entlüftungsschieber **27** angeordnet. Durch diesen ist ein den zweiten Druckraum **13** mit dem Ringkanal **17** verbindender und dabei den Schieberzylinder **26** kreuzender Entlüftungskanal **28** absperrbar. Der Entlüftungsschieber **27** ist durch einen axial an seiner dem dritten Druckraum **14** zugewandten Stirnseite angesetzten Distanzstift **29** mit einem in axialer Fortsetzung in dem Schieberzylinder **26** axial beweglichen Schubkolben **30** verbunden.

Ausgehend von der Ruhestellung, wobei der erste Kolben **5** an dem Zylinderboden **7** anliegt, arbeitet der erfindungsgemäße Linearantrieb wie folgt:
Der erste Druckraum **12** wird über den Luftleitungsanschluß **15** mit Druckluft beaufschlagt. Die Druckluft drückt nun zunächst nur auf den ersten Kolben **5** und das Rückschlagventil **21**, welches unter dem Luftdruck geschlossen gehalten wird. Die Kolbenstange **4** mit der an ihrem äußeren Ende befindlichen Elektrode **31** wird gegen das Werkstück gefahren, bis die Elektrode **31** an das Werkstück anstößt. Dabei werden die anfangs von dem Zwischenboden **8** geschlossen gehaltenen radialen Kanäle **25** zum axialen Kanal **20** der Kolbenstange freigegeben. Die am anderen Ende des axialen Kanals **20** befindlichen radialen Kanäle **24** werden zunächst noch von dem ersten Kolben **25** geschlossen gehalten, weil die vorgespannte Wendeldruckfeder **23** den ersten Kolben **5** noch in seiner Ausgangsstellung hält.
Bei diesem Vorhub wird der zweite Druckraum **13** entlüftet über den Verbindungskanal **18**, der in den an der Peripherie des Zwischenbodens **8** befindlichen Ringkanal **17** mündet, welcher seinerseits mit dem zweiten Luftleitungsanschluß **16** in Verbindung steht. Dabei wird die Bewegung der Elektrode **31** in Richtung auf das Werkstück durch das in dem Verbindungskanal **18** befindliche Drosselventil **19** gebremst mit der Folge, daß die Elektrode **31** ohne wesentliches Geräusch an das Werkstück stößt.
Dem ersten Druckraum **12** wird weiter Druckluft zugeführt. Der erste Kolben **5** schiebt sich nun auf dem Endabschnitt **4b** der Kolbenstange gegen die Wirkung der Wendeldruckfeder **23** in den zweiten Druckraum **13** hinein, bis die Wendeldruckfeder **23** maximal komprimiert ist. Dabei werden die radialen Kanäle **24** zum axialen Kanal **20** der Kolbenstange geöffnet.
Die Druckluft strömt nun um das Rückschlagventil **21** herum durch diese radialen Kanäle **24**, den axialen Kanal **20** und die radialen Kanäle **25** in den dritten Druckraum **14**, wodurch auch der zweite Kolben **6** beaufschlagt wird. Sobald der sich im dritten Druckraum **14** aufbauende Druck größer ist, als der sich im zweiten Druckraum **13** bis dahin gebremst abbauende Druck, wird der Entlüftungsschieber **27** durch den Schubkolben **30** in Richtung zum zweiten Druckraum **14** geschoben. Dadurch wird der Entlüftungskanal **28** geöffnet, so daß die Luft aus dem zweiten Druckraum **14** nun ungedrosselt abströmen kann. Die Elektrode **31** wird nun mit der vollen Kraft der auf beide Kolben **5**,**6** wirkenden Druckluft gegen das Werkstück gepreßt und der Schweißvorgang vollzogen.

Zum Rückhub wird der zweite Druckraum **13** über den zweiten Luftleitungsanschluß **16**, den Ringkanal **17** und den Verbindungskanal **18** mit Druckluft beaufschlagt, wobei sich das Drosselventil **19** öffnet. Der erste Kolben **5** schiebt sich zunächst unter dem Druck der Wendeldruckfeder **23** in seine Ausgangsposition am Endabschnitt **4b** der Kolbenstange und wird dann gemeinsam mit dieser und dem zweiten Kolben **6** gegen den Zylinderboden **7** in die Ausgangsposition zur Bereitschaft eines neuen Schweißvorganges geschoben. Dabei wird der erste Druckraum **12** unmittelbar über den nun drucklosen Luftleitungsanschluß **15** entlüftet. Die Entlüftung des dritten Druckraumes **14** erfolgt durch die radialen Kanäle **25**, den axialen Kanal **20** der Kolbenstange und das an dem Endabschnitt **4b** der Kolbenstange befindliche, sich nun öffnende Rückschlagventil **21** in den ersten Druckraum **12**.

Der Rückhub ist beendet und der Antrieb für einen neuen Arbeitshub bereit, wenn die beweglichen Teile die in der Zeichnung dargestellte Position wieder eingenommen haben.

## Patentansprüche

1. Pneumatisch betätigbarer Linearantrieb für Punktschweiß-Automaten mit den Merkmalen:
a) In einem Zylinder (1, 2, 3) sind mehrere in Tandemanordnung an einer Kolbenstange (4) geführte Kolben (5, 6) angeordnet, wobei der Zylinder (1, 2, 3) an einem Ende durch einen Zylinderboden (7) verschlossen ist und in seinem anderen Endbereich einen von der Kolbenstange (4) durchdrungenen Führungsring (9) hat, wobei jeweils zwischen zwei benachbarten Kolben (5, 6) ein von der Kolbenstange (4) durchdrungener zylinderfester Zwischenboden (8) angeordnet ist, so daß der Zylinder (1, 2, 3) in wenigstens drei Druckräume (12, 13, 14) unterteilt ist, nämlich in einen zwischen dem Zylinderboden (7) und diesem benachbarten ersten Kolben (5) gelegenen ersten Druckraum (12), einen zwischen dem ersten Kolben (5) und dem diesem benachbarten Zwischenboden (8) gelegenen zweiten Druckraum (13) und einen zwischen dem vom Zylinderboden (7) ausgehend zweiten Kolben (6) und dem Zwischenboden (8) gelegenen dritten Druckraum (14);
b) die Kolbenstange (4) hat auf ihrem zwischen den Kolben (5, 6) sich erstreckenden Abschnitt einen axialen Kanal (22), dessen zylinderbodenseitiges Ende ein Rückschlagventil (21) aufweist und über dieses in den ersten Druckraum (12) mündet und der durch radiale Kanäle (24) mit dem ersten Druckraum (12) und dem dritten Druckraum (14) verbindbar ist, wobei der Zylinder (1, 2, 3) zwei Luftleitungsanschlüsse (15, 16) hat, von denen der dem Zylinderboden (7) nächstgelegene Luftleitungsanschluß (15) in den ersten Druckraum (12) führt und mit dem dritten Druckraum (14) verbindbar ist, während der vom Zylinderboden (7) entferntere Luftleitungsanschluß (16) über ein Drosselventil (19) in den zweiten Druckraum (13) führt;
c) der erste Kolben (5) ist auf einem zum Zylinderboden (7) gerichteten Endabschnitt (4a) mit geringerem Durchmesser der Kolbenstange (4) axial beweglich angeordnet, wobei er in seiner zylinderbodenseitigen Endlage die aus dem axialen Kanal (20) der Kolbenstange (4) in den ersten Druckraum (12) führenden radialen Kanäle (24) verschließt, die er in seiner zylinderbodenfernen Endlage freigibt,
**dadurch gekennzeichnet,**
d) daß auf dem Endabschnitt (4b) mit geringerem Durchmesser der Kolbenstange (4) eine diese koaxial umgebende Wendeldruckfeder (23) angeordnet ist, die sich unter Vorspannung einerseits an der Rückseite des ersten Kolbens (5) und andererseits an dem den Endabschnitt (4b) der Kolbenstange (4) begrenzenden Absatz (22) abstützt, wobei die zylinderbodenseitige Endlage des ersten Kolbens (5) durch das an dem Endabschnitt (4b) der Kolbenstange (4) als Kopfschraube (21b) mit einem achsparallelen Kanal (21c) ausgebildete Gehäuse des dort angeordneten Rückschlagventils (21) und seine zylinderbodenferne Endlage durch die maximale Kompression der Wendeldruckfeder (23) bestimmt ist;
e) daß wenigstens der vom Zylinderboden (7) ausgehend erste Zwischenboden (8) einen peripheren Ringkanal (17) aufweist, der einerseits unmittelbar mit dem zweiten Luftleitungsanschluß (16) und andererseits über einen das Drosselventil (19) enthaltenden Verbindungskanal (18) mit dem zweiten Druckraum (13) verbunden ist;
f) daß wenigstens der erste Zwischenboden (8) in seinem peripheren Bereich einen wenigstens annähernd achsparallel verlaufenden Schieberzylinder (26) enthält, der einerseits zum zweiten Druckraum (13) und andererseits zum dritten Druckraum (14) offen ist und in dem ein in Abhängigkeit von den Druckdifferenzen zwischen dem zweiten Druckraum (13) und dem dritten Druckraum (14) axial beweglicher Entlüftungsschieber (27) angeordnet ist, durch den ein im Zylinderboden (8) verlaufender, den zweiten Druckraum (13) mit dem Ringkanal (17) verbindender und dabei den Schieberzylinder (26) kreuzender Entlüftungskanal (28) absperrbar ist.

2. Pneumatisch betätigbarer Linearantrieb nach Anspruch 1,
**dadurch gekennzeichnet,**
daß das an dem Endabschnitt (4b) der Kolbenstange angeordnete Rückschlagventil (21) als Membranventil ausgebildet ist, dessen Membrane (21a) senkrecht zur Zylinderachse auf dem als Kopfschraube (21b) mit einem achsparallelen Kanal (21c) ausgebildeten Ventilsitz liegt.

3. Pneumatisch betätigbarer Linearantrieb nach einem der Ansprüche 1 oder 2,
**dadurch gekennzeichnet,**
daß der Entlüftungsschieber (27) die Form eines den Querschnitt des Zylinderschiebers (26) ausfüllenden Zylinders hat und durch einen axial an seiner dem dritten Druckraum (14) zugewandten Stirnseite angesetzten Distanzstift (29) mit einem in axialer Fortsetzung in dem Schieberzylinder (26) axial beweglichen Schubkolben (30) verbunden ist.

## Claims

1. Pneumatic operable actuator for spot weld automats comprising the features:
a) a cylinder (1, 2, 3) has arranged therein a plurality of pistons (5, 6) which are guided in tandem fashion on a piston rod (4), said cylinder (1, 2, 3) being closed at one end by a cylinder bottom (7) and having its other end portion provided with a guide ring (9) passed through by said piston rod (4), with a cylinder-fixed intermediate bottom (8) which is passed through by said piston rod (4) being respectively arranged between two adjacent pistons (5, 6), so that said cylinder (1, 2, 3) is divided into at least three pressure chambers (12, 13, 14), namely into a first pressure chamber (12) situated between said cylinder bottom (7) and the first piston (5) adjacent thereto, a second pressure chamber (13) situated between said first piston (5) and said intermediate bottom (8) adjacent thereto, and a third pressure chamber (14) situated between said second piston (6) starting from said cylinder bottom (7), and said intermediate bottom (8);
b) said piston rod (4) is provided on its section extending between said pistons (5, 6) with an axial channel (22) whose end at the cylinder bottom side comprises a check valve (21) and terminates via said valve into said first pressure chamber (12) and which is connectable through radial channels (24) to said first pressure chamber (12) and said third pressure chamber (14), said cylinder (1, 2, 3) having two air duct connections (15, 16) of which the air duct connection (15) closest to said cylinder bottom (7) leads into said first pressure chamber (12) and is connectable to said third pressure chamber (14) while the air duct connection (16) remote from said cylinder bottom (7) leads via a throttle valve (19) into said second pressure chamber (13);
c) said first piston (5) is axially movably arranged on an end section (4a) oriented towards said cylinder bottom (7) with a smaller diameter of said piston rod (4), and closes, in its end position at the cylinder bottom side, the radial channels (24) which lead out of the axial channel (20) of said piston rod (4) into said first pressure chamber (12), and releases said channels in its end position remote from said cylinder bottom,
**characterized in**
d) that said end section (4b) with a smaller diameter of said piston rod (4) has arranged thereon a helical compression spring (23) which coaxially surrounds said rod and which is supported under bias on the back side of said first piston (5) on the one hand and on a step (22) defining the end section (4b) of said piston rod (4) on the other hand, the end position of said first piston (5) at the cylinder bottom side being defined by the casing which is formed on said end section (4b) of said piston rod (4) as a head screw (21b) with an axially parallel channel (21c) and pertains to the check valve (21) arranged thereon, and the end position of said first piston remote from said cylinder bottom being defined by the maximum compression of said helical compression spring (23);
e) that at least the first intermediate bottom (8) starting from said cylinder bottom (7) comprises a peripheral annular channel (17) which, on the one hand, is directly connected to said second air duct connection (16) and, on the other hand, to said second pressure chamber (13) via a connection channel (18) containing said throttle valve (19);
f) that at least said first intermediate bottom (8) in its peripheral portion contains a slide cylinder (26) which extends at least approximately in axially parallel fashion and which is open to said second pressure chamber (13) on the one hand and to said third pressure chamber (14) on the other hand and which has arranged therein a vent slide (27) which is axially movable in response to the pressure differences between said second pressure chamber (13) and said third pressure chamber (14) and which is adapted to shut off a vent channel (28) which extends in said cylinder bottom (8) and connects said second pressure chamber (13) to said annular channel (17), thereby crossing said slide cylinder (26).

2. Pneumatic operable actuator according to claim 1,
**characterized in** that said check valve (21) which is arranged on the end section (4b) of said piston rod is designed as a diaphragm valve whose diaphragm (21a) is positioned in a direction perpendicular to the cylinder axis on the valve seat designed as a head screw (21b) with an axially parallel channel (21c).

3. Pneumatic operable actuator according to any one of claims 1 or 2,
**characterized in** that said vent slide (27) has the shape of a cylinder filling the cross-section of said cylinder slide (26) and is connected through a spacer pin (29) axially mounted on the front side thereof facing said third pressure chamber (14), to a push piston (30) which is axially movable in axial continuation in said slide cylinder (26).

## Revendications

1. Entraînement linéaire à actionnement pneumatique pour automates de soudage par points, avec les caractéristiques suivantes:
a) Dans un cylindre (1, 2, 3) sont placés plusieurs pistons (5, 6) en tandem conduits par une tige de piston (4), le cylindre (1, 2, 3) étant fermé à une de ses extrêmités par un fond de cylindre (7) et possédant à l'autre extrêmité une bague de guidage (9) traversée par la tige de piston (4), un fond intermédiaire respectif (8) fixe dans le cylindre étant placé entre deux pistons (5, 6) voisins et étant traversé par la tige de piston (4), si bien que le cylindre (1, 2, 3) est subdivisé en au moins trois chambres de pression (12, 13, 14), c'est-à-dire en une première chambre de pression (12) située entre le fond du cylindre (7) et le premier piston (5) l'avoisinant, en une deuxième chambre de pression (13) située entre le premier piston (5) et le fond intermédiaire (8) l'avoisinant et en une troisième chambre de pression (14) située entre le fond intermédiaire (8) et le deuxième piston (6) en comptant à partir du fond du cylindre (7).
b) la tige de piston (4), sur sa section s'étendant entre les deux pistons (5, 6), possède un canal axial (22), dont l'extrêmité au niveau du fond du cylindre possède une soupape de non-retour (21) et débouche par celle-ci dans la première chambre de pression (12), et qui est raccordable à la première et la troisième chambre de pression (12, 14) au moyen de canaux radiaux (24), le cylindre (1, 2, 3) possédant deux raccords de conduite d'air (15, 16), dont le raccord de conduite d'air (15), qui se trouve le plus près du fond du cylindre (7), conduit dans la première chambre de pression (12) et est raccordable à la troisième chambre de pression (14), pendant que le raccord de conduite d'air (16), qui se trouve le plus loin du fond du cylindre (7), conduit dans la deuxième chambre de pression (13) au moyen d'une soupape d'étranglement (19);
c) le premier piston (5) est disposé, de manière à être axialement mobile, sur une section terminale (4a) de la tige de piston (4) qui est de plus faible diamètre et orientée vers le fond du cylindre (7), et en même temps, en sa position terminale du côté du fond du cylindre, il obture les canaux radiaux (24) qui conduisent du canal axial (20) de la tige de piston (4) vers la première chambre de pression (12), alors qu'il libère ces canaux en sa position finale éloignée du fond du cylindre,
**caractérisé en ce que**
d) un ressort spiral (23) est placé sur la section terminale (4b) avec plus faible diamètre de la tige de piston (4) qu'il entoure coaxialement, et il s'appuie, avec prétension, d'une part sur le côté dorsal du premier piston (5) et d'autre part sur le talon (22) délimitant la section terminale (4b) de la tige de piston (4), et en même temps, la position terminale du premier piston (5) proche du fond du cylindre est déterminée par le boîtier de la soupape de non-retour (21), le boîtier ayant sur la section terminale (4b) de la tige de piston (4) la forme d'une vis à tête (21b) avec un canal (21c) parallèle à l'axe et la soupape y étant disposée, et la position terminale éloignée au fond du cylindre est déterminée par la compression maximale du ressort spiral (23);
e) au moins le premier fond intermédiaire (8) compté à partir du fond du cylindre (7) possède un canal annulaire (17) périphérique, qui est raccordé d'une part directement au deuxième raccord (16) de la conduite d'air et d'autre part à la deuxième chambre de pression (13) au moyen d'un canal de jonction (18), contenant la soupape d'étranglement (19);
f) au moins le premier fond intermédiaire (8) contient sur sa zone périphérique un cylindre de vanne (26) de direction au moins à-peu-près parallèle à l'axe, lequel cylindre est ouvert d'une part vers la deuxième chambre de pression (13) et d'autre part vers la troisième chambre de pression (14), et dans lequel est disposée une vanne d'aération (27) axialement mobile en fonction des différences de pression entre la deuxième et la troisième chambre de pression (13, 14), par laquelle est obturable un canal d'aération 28 passant par le fond intermédiaire (8), reliant la deuxième chambre de pression (13) au canal annulaire (17) et croisant en même temps le cylindre de vanne (26).

2. Entraînement linéaire à actionnement pneumatique selon la revendication 1,
**caractérisé en ce que**
la soupape de non-retour (21), située sur la section terminale (4b) de la tige de piston, est conçue comme soupape membranaire, dont la membrane (21a) est située orthogonalement à l'axe du cylindre sur le logement de la soupape en forme de vis à tête (21b) avec un canal parallèle à l'axe (21c).

3. Entraînement linéaire à actionnement pneumatique selon l'une des revendication 1 ou 2,
**caractérisé en ce que**
la vanne d'aération (27) a la forme d'un cylindre remplissant la coupe transversale du cylindre de vanne (26) et est raccordée à un piston pousseur (30) axialement mobile dans le cylindre de vanne (26), en prolongement axial, au moyen d'une goupille d'écartement (29) placée axialement sur son côté frontal tourné vers la troisième chambre de pression (14).
